# FASCICULE DE BREVET EUROPEEN

(11) **EP 0 930 948 B1**
(45) Date de publication et mention de la délivrance du brevet: **30.08.2000**
(21) Numéro de dépôt: 97943824.9
(22) Date de dépôt: 27.08.1997
(51) Int. Cl.: B22D 19/06, B22D 19/02

(54) **PIECE D'USURE COMPOSITE**
VERSCHLEISSFESTER VERBUNDKÖRPER
COMPOSITE WEAR PART

(30) Priorité: 01.10.1996 EP 96202741; 04.07.1997 EP 97870099
(43) Date de publication de la demande: 28.07.1999
(73) Titulaire: Francois, Hubert, 4430 Ans (BE)
(72) Inventeur: Francois, Hubert, 4430 Ans (BE)
(74) Mandataire: Van Malderen, Michel
(86) Numéro de dépôt international: EP9704762
(87) Numéro de publication internationale: WO9815373

(56) Documents cités:
- EP-A- 0 476 496
- EP-A- 0 575 685
- DE-A- 1 949 777
- DE-A- 2 335 588
- DE-C- 702 385
- DE-U- 7 326 661
- JP-A- 2 187 250
- JP-A- 62 214 863
- US-A- 3 181 939
- PATENT ABSTRACTS OF JAPAN vol. 012, no. 171 (M-700), 21 mai 1988 & JP 62 286661 A (KAWASAKI HEAVY IND LTD), 12 décembre 1987,
- W. GERHARTZ ET AL.: "Ullmann's Encyclopedia of Industrial Chemistry" 1985 , VCH VERLAGSGESELLSCHAFT , WEINHEIM, DE, FIFTH EDITION XP002023826 Volume A 1,page 5
- PATENT ABSTRACTS OF JAPAN vol. 017, no. 635 (M-1514), 25 novembre 1993 & JP 05 200526 A (MITSUBISHI HEAVY IND LTD), 10 août 1993,
- PATENT ABSTRACTS OF JAPAN vol. 009, no. 286 (M-429), 13 novembre 1985 & JP 60 127067 A (KUBOTA TEKKO KK), 6 juillet 1985,

## Description

### Objet de l'invention

La présente invention concerne une pièce d'usure composite réalisée par coulée et constituée d'une matrice métallique dont la face d'usure comporte des inserts ayant de bonnes propriétés de résistance à l'usure.

### Arrière-plan technologique à la base de l'invention

L'invention concerne notamment des pièces d'usure utilisées dans des installations de broyage, de concassage et de transport de matières abrasives diverses que l'on rencontre dans les industries telles que cimenteries, mines, métallurgie, centrales électriques ou carrières diverses. Ces pièces sont souvent soumises à des sollicitations mécaniques élevées dans la masse et à une forte usure par abrasion à la face travaillante. Il est dès lors souhaitable que ces pièces présentent une forte résistance à l'abrasion et une certaine ductilité pour pouvoir résister aux sollicitations mécaniques telles que des chocs et pour pouvoir éventuellement être usinées.

Etant donné que ces deux propriétés sont difficilement conciliables entre elles dans la même matière, on a déjà proposé des pièces composites ayant un noyau en alliage relativement ductile dans lequel sont noyés des inserts isolés ayant une bonne résistance à l'usure.

Le document EP-A-0476496 propose cette technique pour la réalisation de galets de broyage dont la face travaillante est garnie d'inserts en fonte au chrome.

Sachant que les matières céramiques ont des bonnes propriétés de résistance à l'abrasion, il est également connu d'utiliser ces matériaux pour améliorer la résistance à l'abrasion de pièces d'usure.

Le document EP-A-0575685, sur lequel les préambules des revendications 1 et 9 sont basés, propose l'utilisation de matières céramiques dans un moulage par coulée de précision en cire perdue de petites pièces d'usure.

Ce procédé bien connu utilise des modèles en cire qui doivent être fondus pour l'obtension de la cavité du moule qui doit être remplie de métal; ce moule est contitué lui-même de céramique et non d'un sable classique.

Selon ce document, on forme d'abord une galette céramique de structure spongieuse présentant un réseau tridimensionnel de pores ouverts communiquant tous entre eux. Cette galette céramique est formée en versant dans un moule approprié des grains de matières céramiques et ensuite, une colle liquide d'une bonne fluidité, par exemple une résine liquide qui, après durcissement, retient les grains pour former la structure céramique. La matière céramique peut être constituée d'oxyde d'aluminium ou d'oxyde de zirconium. Après avoir été préalablement imprégnée de cire, cette galette est placée dans un moule destiné à créer le modèle en cire de la pièce. Le modèle en cire est alors coulé et on réalise enfin le moule céramique par trempage du modèle en cire dans une barbotine de céramique.Le moule céramique contenant le modèle en cire est alors chauffé de façon à faire fondre le modèle en cire. La cire s'écoule ainsi du moule en céramique mais les galettes insérées au préalable dans le modèle de cire restent colées aux parois du moule céramique.

Pour la coulée du métal dans le moule céramique, celui-ci est préchauffé à une température de l'ordre de 1150°c, généralement sous vide.

Cette technique connue se limite toutefois au moulage de précision en cire perdue. De plus, la compatibilité entre la matrice métallique et la structure céramique, notamment en terme de comportement thermique, ne pose guère de problèmes pour les applications mentionnées dans ce document, étant donné que, lors de la coulée du métal, le moule et la structure céramique sont préchauffés à une température élevée. La technique est, en outre, limitée à la réalisation de pièces particulières très précises, qui sont vendues à un prix très élevé car le procédé de moulage en cire perdue est lui-même très coûteux.

Le document « Ullmann's Encyclopedia of Industrial Chemistry »(1985), W. Gerhartz, VCH Verslagsgesellschaft, 5^{th} Edition XP002023826, page 5 mentionne des compositions à base de Al₂O₃-ZrO₂ pour des engins de meulage destinés à traiter des produits de fonderie (billettes et « slabs »).

### Problèmes à la base de l'invention

La technique décrite ci-dessus n'est pas transposable telle quelle à la fabrication de pièces d'usure de dimensions plus élevées pour des applications telles que rencontrées dans les installations de broyage, de concassage ou de transport de matières abrasives où les pièces présentent en général des sections d'au moins 25 mm, et souvent supérieure à 40 mm.

En outre, suivant la technique de la présente invention il n'est pas possible, ou tout au moins il est difficilement envisageable, de couler des pièces de fines sections, par exemple inférieures à 25 mm, car ni le moule ni l'insert en céramique ne sont préchauffés à haute température avant la coulée du métal.

Par ailleurs, la pièce subit habituellement un traitement thermique ultérieur. Il faut donc qu'il y ait une certaine compatibilité du point de vue comportement thermique entre la matière céramique et le métal pour éviter des fissurations dues aux chocs thermiques lors de la coulée du métal liquide sur les inserts céramiques et celles pouvant être engendrées lors du traitement thermique ultérieur et occasionnées par les coefficients de dilatation différents de ces deux matériaux.

Il faut, par ailleurs que les propriétés mécaniques de la matière céramique soient adaptées à celles du métal afin de réaliser une pièce dont les propriétés répondent aux exigences de l'application particulière à laquelle elle est destinée.

Le but de la présente invention est de prévoir une pièce d'usure composite avec des inserts céramiques répondant, de façon satisfaisante, aux exigences énumérées ci-dessus.

Un second problème se pose dans le fait qu'au-delà d'une épaisseur de 25 mm de la matière céramique, on observe une mauvaise infiltration du métal. Un autre but de la présente invention vise à résoudre ce second problème en proposant des géométries particulières de la pièce d'usure composite.

### Principaux éléments caractéristiques de l'invention

Pour atteindre le premier objectif, l'invention propose une pièce d'usure composite réalisée par coulée classique ou centrifuge. Elle est constituée d'une matrice métallique dont la surface d'usure comporte des inserts ayant de bonnes propriétés de résistance à l'abrasion, ces inserts étant réalisés en un matériau céramique, lui-même composite, constitué d'une solution solide ou phase homogène de 20 à 80% de Al₂O₃ et 80 à 20% de ZrO₂, les pourcentages étant exprimés en poids de constituants.

Le matériau céramique peut en outre contenir d'autres oxydes dont la proportion en poids n'excède pas 3 à 4%.

Selon une première forme d'exécution préférée de la présente invention, la composition de la matière céramique est la suivante :
55-60% en poids d'Al₂O₃, et
38-42% en poids de ZrO₂

Selon une autre forme d'exécution préférée, la composition de la matière céramique est la suivante :
70-77% en poids d'Al₂O₃, et
23-27% en poids de ZrO_{2.}

La teneur en matières céramiques dans l'insert est comprise entre 35 et 80% en poids, de préférence entre 40 et 60% et avantageusement de l'ordre de 50%.

Cette matière céramique composite est réalisée à partir d'un agglomérat de grains céramiques présentant une granulométrie comprise dans la gamme F6 à F22 selon la norme FEPA, c'est-à-dire un diamètre compris entre environ 0,7 mm et 5,5 mm. Ces grains céramiques sont fabriqués de manière classique, par électrofusion, par frittage, par projection thermique ou par tout autre procédé permettant de fusionner les deux constituants.

Les grains céramiques sont agglomérés à l'aide d'une colle, dont la proportion n'excède pas 4% en poids par rapport au poids total de la galette, et est de préférence comprise entre 2 et 3% en poids. Cette colle peut être minérale ou organique. A titre d'exemple, on peut citer une colle à base d'un silicate ou une colle se présentant sous forme de résine époxy.

L'invention repose sur la constatation que l'oxyde d'aluminium (corindon) et l'oxyde de zirconium ont des propriétés relativement différentes, ce qui permet, par un choix judicieux dans les fourchettes précitées, d'ajuster la dureté, la ténacité et le coefficient de dilatation thermique du composite céramique de façon à allier une bonne dureté et une bonne ténacité et le rendre compatible avec l'application précise à laquelle la pièce est destinée, d'une part, et pour obtenir, d'autre part, un coefficient de dilatation du composite céramique qui est proche de celui du métal de coulée choisi, c'est-à-dire de la fonte ou de l'acier ayant un coefficient de dilatation compris entre 10.10⁻⁶ et 11.10⁻⁶.

L'oxyde de zirconium a l'avantage d'avoir un coefficient de dilatation qui est proche de celui du métal. En outre, il contribue à une bonne ténacité, c'est-à-dire qu'il réduit les risques de casse.

L'oxyde d'aluminium, de son côté, contribue à une bonne dureté. Au sein des galettes, les particules de zircone présentes dans l'alumine permettent d'augmenter la résistance à la fissuration de cette dernière et d'obtenir ainsi une ténacité supérieure à celle de chacun des composants considéré isolément, à savoir ZrO₂ ou Al₂O₃.

Autrement dit, dans les pièces d'usure qui sont soumises à une forte abrasion, il y a intérêt à augmenter la proportion d'oxyde d'aluminium en ne dépassant pas, toutefois, une certaine limite au-delà de laquelle la résistance à l'abrasion et la ténacité commencent à diminuer. Dans ce cas, on choisit plutôt la seconde gamme pour la composition céramique.

En revanche, pour les pièces qui sont soumises à des chocs importants ou à des pressions élevées, il y a intérêt à privilégier le coefficient de dilatation au détriment de la dureté et à augmenter la proportion d'oxyde de zirconium afin de diminuer les contraintes dans la pièce et, de ce fait, les risques de casse.

Pour les pièces où il y a risque de fissuration lors de la coulée ou lors du traitement thermique ultérieur, il est également avantageux d'augmenter la proportion d'oxyde de zirconium pour approcher le coefficient de dilatation de l'insert de celui de la matrice métallique.

Le choix des proportions des constituants de l'insert céramique composite peut, bien entendu, également tenir compte de la composition du métal de coulée en vue des propriétés qu'exige l'application à laquelle la pièce est destinée. De même, le choix de la composition du métal de coulée peut être adapté à la nature de l'insert composite.

Afin de résoudre le problème de la mauvaise infiltration du métal liquide au sein de la phase céramique, diverses géométries sont proposées dans le cadre de la présente invention.

Dans le cas particulier où l'épaisseur de la galette réalisée en matériau céramique devient importante, on proposera, selon une première forme d'exécution, deux ou plusieurs galettes en matériau céramique superposées tout en maintenant celles-ci séparées par un espace minimal de l'ordre de 10 mm afin de permettre l'arrivée du métal liquide. Ceci permet d'obtenir ainsi une infiltration correcte des diverses galettes. De cette manière, on obtient une augmentation appréciable de la proportion de la phase céramique au sein de l'insert sans être confronté au problème de la mauvaise infiltration par le métal.

Selon une autre forme d'exécution, on proposera plutôt de réaliser la galette sous la forme d'une structure en "nids d'abeilles" qui comprend diverses cellules élémentaires se présentant sous forme polygonale ou circulaire au sein de la phase céramique. De préférence, l'épaisseur des parois des différentes cellules constituant la phase céramique varie entre 5 et 25 mm.

A nouveau, cette forme d'exécution permet d'augmenter la quantité de la phase céramique sans risquer toutefois le problème d'une mauvaise infiltration du métal liquide dans le cas d'une pièce dont l'usure s'effectue plus particulièrement en profondeur.

A nouveau, l'avantage réside dans le fait que les parois n'excèdent pas l'épaisseur limite d'infiltration du métal liquide, qui est d'environ 25 mm, avec toutefois une hauteur qui est pratiquement égale à la hauteur de la pièce composite. En outre, en proposant cette seconde forme d'exécution de réalisation de la galette sous forme de "nids d'abeilles", on observe l'amélioration du processus de broyage. En effet, il se crée, après un certain temps de service, des alvéoles creusées dans la partie cellulaire métallique, qui se remplissent ensuite de matière à broyer et assurent ainsi un rôle d'auto-protection contre l'usure. Ce profil permet avantageusement d'éviter à la matière broyée de créer des chemins d'usure préférentiels se traduisant par une chute de débit pour les broyeurs. On observe en outre que cette structure sous forme de "nids d'abeilles" selon la seconde forme d'exécution préférée permet de diminuer le risque de la propagation des fissures qui pourraient se développer dans la galette infiltrée lors de la réalisation de la pièce. En effet, les criques qui se formeraient se ferment alors sur elles-mêmes et ne se propagent pas dans la pièce entière.

### Brève description des figures

- La figure 1: décrit une pièce d'usure composite selon une première forme d'exécution préférée de la présente invention.
- La figure 2: décrit une pièce d'usure composite selon une seconde forme d'exécution de la présente invention.
- La figure 3: décrit une application particulière pour une pièce d'usure composite selon la présente invention.

### Exemples

### Exemple 1 : fabrication d'un éjecteur de concasseur à axe vertical

On forme un mélange de 75% de Al₂O₃ et 23% de ZrO₂ dont on fusionne par électrofusion les deux constituants pour former des grains composites d'une granulométrie comprise dans les catégories F6 à F20 de la norme FEPA. On verse ensuite ces grains dans un moule de forme appropriée avec une colle liquide qui, après durcissement, retient les grains ensemble pour former une galette céramique.

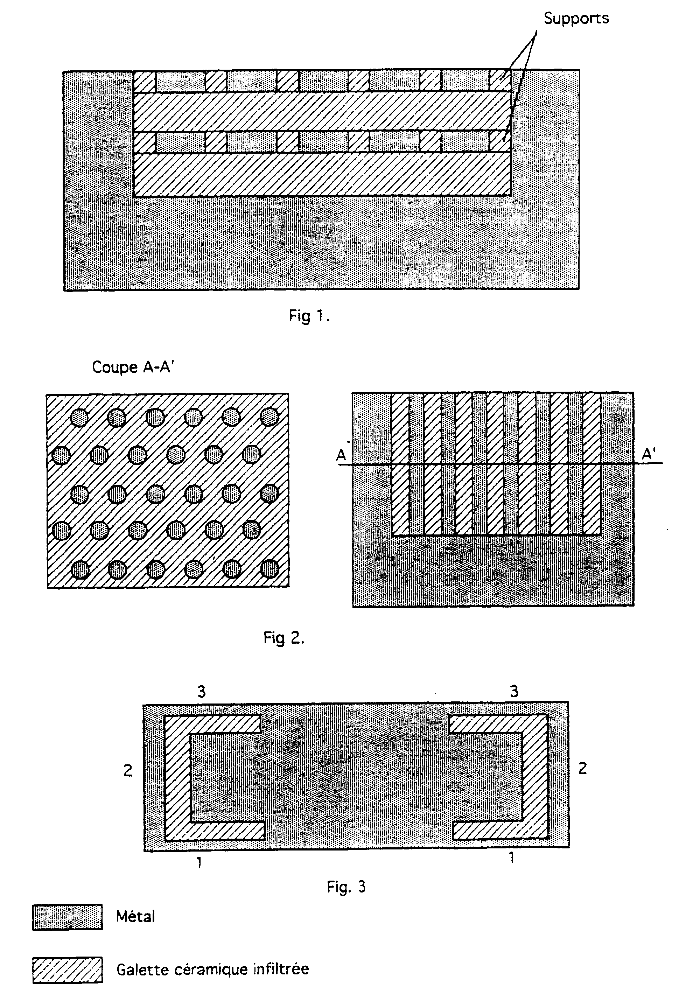

Dans cet exemple particulier, il est recommandé d'utiliser la configuration représentée à la figure 1, qui prend deux galettes céramiques superposées et laissant entre elles un espace de 10 mm. Ces galettes sont disposées dans un moule approprié, de préférence en sable, dans lequel on coule ensuite une fonte liquide comprenant 3% de carbone, 26% de chrome et d'autres éléments traditionnels en faible proportion que l'on rencontre toujours dans les alliages de ce type. On réalise ainsi une pièce d'usure avec des inserts céramiques d'une dureté de l'ordre de 1 600 Hv avec un coefficient de dilatation voisin de 8.10⁻⁶, maintenu dans une matrice de fonte d'une dureté voisine de 750 Hv.

### Exemple 2 : fabrication d'un rotor de concasseur.

On prépare la matière céramique comme dans l'exemple 1 mais en choisissant, cette fois-ci, une composition qui privilégie le coefficient de dilatation au détriment de la dureté, c'est-à-dire en prenant 40% de ZrO₂ et 60% de Al₂O₃.

Etant donné que l'épaisseur est particulièrement importante pour ce genre de pièce, on utilise une configuration sous forme de "nids d'abeilles" telle que représentée à la figure 2. Dans ce cas, la structure est en forme de "nids d'abeilles" dont les cellules ont des parois dont l'épaisseur est d'environ 20 mm et dont la hauteur est pratiquement égale à la hauteur de la pièce composite. Cette structure est réalise à l'aide d'un acier au manganèse avec une composition de 1% de carbone, 14% de manganèse et 1,5% de molybdène.

On réalise ainsi une pièce composite d'une dureté d'environ 1350 Hv avec un coefficient de dilatation voisin de 9.10⁻⁶. Le but est ici de diminuer le risque de criques dans la pièce à cause du niveau d'impact élevé auquel est soumis ce type de pièce.

### Exemple 3 : battoir

La figure 3 représente un exemple d'une galette céramique utilisée pour une application dans les battoirs, qui permet de renforcer les trois phases d'usure du battoir. La galette céramique est une pièce unique, située au sein de la phase métallique.

## Revendications

1. Pièce d'usure composite réalisée par coulée classique ou centrifuge utilisant des moules de sable et constituée d'une matrice métallique dont la ou les faces travaillantes comprennent des inserts ayant une bonne résistance à l'usure, caractérisée en ce que les pièces ont une section supérieure à 25 mm et en ce que les inserts sont constitués à partir d'une galette céramique imprégnée d'un métal liquide lors de la coulée, cette galette céramique étant constituée d'une solution solide homogène de 20 à 80% de Al₂O₃ et 80 à 20% de ZrO₂, les pourcentages étant exprimés en poids des constituants.

2. Pièce d'usure composite selon la revendication 1, caractérisée en ce que la matière céramique comprend de 55 à 60% en poids de Al₂O₃ et de 38 à 42% en poids de ZrO₂.

3. Pièce d'usure composite selon la revendication 1, caractérisée en ce que la matière céramique comprend de 70 à 77% en poids de Al₂O₃ et de 23 à 27% en poids de ZrO₂.

4. Pièce d'usure composite selon l'une quelconque des revendications précédentes, caractérisée en ce que la teneur en matières céramiques dans l'insert est comprise entre 35 et 80% en poids, de préférence entre 40 et 60% et avantageusement de l'ordre de 50%.

5. Pièce d'usure composite selon l'une quelconque des revendications précédentes, caractérisée en ce que les inserts sont constitués d'un agglomérat de grains céramiques composites ayant une granulométrie comprise dans la gamme F6 à F22 selon la norme FEPA.

6. Pièce d'usure composite selon l'une quelconque des revendications précédentes, caractérisée en ce que les grains céramiques sont fabriqués par électrofusion, par frittage, par projection thermique ou tout autre procédé.

7. Pièce d'usure composite selon l'une quelconque des revendications précédentes, caractérisée en ce que les grains céramiques sont solidarisés à l'aide d'une colle liquide minérale ou organique en vue de la réalisation de la galette céramique.

8. Pièce d'usure composite selon la revendication 7, caractérisée en ce que la galette ne contient pas plus de 4% de colle.

9. Pièce d'usure composite réalisée par coulée utilisant des moules de sable et composée d'une matrice métallique comprenant au moins une galette céramique, caractérisée en ce que les pièces ont une section supérieure à 25 mm et en ce qu'au moins deux galettes céramiques sont juxtaposées, laissant entre elles un espace de l'ordre de 10 mm afin de permettre l'arrivée du métal liquide.

10. Pièce d'usure composite réalisée par coulée classique ou centrifuge selon l'une quelconque des revendications précédentes, constituée d'une matrice métallique comprenant une galette céramique résistante à l'usure, caractérisée en ce que la galette céramique se présente sous la forme d'une structure en nids d'abeilles dont les diverses cellules sont de forme polygonale ou circulaire au sein de la phase céramique.

11. Pièce d'usure composite selon la revendication 10, caractérisée en ce que l'épaisseur des parois des différentes cellules constituant la phase céramique varie de 5 à 25 mm.

## Patentansprüche

1. Verbundverschleißteil, das durch herkömmlichen Guß oder Schleuderguß unter Verwendung von Sandformen verwirklicht ist, und das aus einer metallischen Grundmasse besteht, deren tragende Fläche oder Flächen Einsätze aufweisen, die eine gute Verschleißfestigkeit haben, dadurch gekennzeichnet, daß die Teile einen Querschnitt über 25 mm haben, und daß die Einsätze aus einer keramischen Platte gebildet sind, die bei dem Guß mit einem flüssigen Metall getränkt wurde, wobei diese keramische Platte aus einer homogenen, festen Lösung aus 20 bis 80% Al₂O₃ und 80 bis 20% ZrO₂ besteht, wobei die Prozentsätze in Gewichtsprozent der Bestandteile ausgedrückt sind.

2. Verbundverschleißteil gemäß Anspruch 1, dadurch gekennzeichnet, daß das keramische Material 55 bis 60 Gewichtsprozent Al₂O₃ und 38 bis 42 Gewichtsprozent ZrO₂ aufweist.

3. Verbundverschleißteil gemäß Anspruch 1, dadurch gekennzeichnet, daß das keramische Material 70 bis 77 Gewichtsprozent Al₂O₃ und 23 bis 27 Gewichtsprozent ZrO₂ aufweist.

4. Verbundverschleißteil gemäß irgendeinem der vorhergehenden Ansprüche, dadurch gekennzeichnet, daß der Gehalt an keramischen Materialien bei dem Einsatz zwischen 35 und 80 Gewichtsprozent, vorzugsweise zwischen 40 und 60 Gewichtsprozent liegt, und in vorteilhafter Weise ungefähr 50% beträgt.

5. Verbundverschleißteil gemäß irgendeinem der vorhergehenden Ansprüche, dadurch gekennzeichnet, daß die Einsätze aus einem Agglomerat von keramischen Verbundkörnern bestehen, die eine Kornklassierung haben, die in dem Bereich F6 bis F22 gemäß der FEPA-Norm liegt.

6. Verbundverschleißteil gemäß irgendeinem der vorhergehenden Ansprüche, dadurch gekennzeichnet, daß die keramischen Körner durch Elektroschmelzen, durch Sintern, durch thermisches Spritzen oder nach irgendeinem anderen Verfahren hergestellt sind.

7. Verbundverschleißteil gemäß irgendeinem der vorhergehenden Ansprüche, dadurch gekennzeichnet, daß die keramischen Körner mit Hilfe eines mineralischen oder organischen, flüssigen Klebers miteinander verbunden werden, um die keramische Platte zu verwirklichen.

8. Verbundverschleißteil gemäß Anspruch 7, dadurch gekennzeichnet, daß die Platte nicht mehr als 4% Kleber enthält.

9. Verbundverschleißteil, das unter Verwendung von Sandformen durch Gießen hergestellt ist und aus einer metallischen Grundmasse besteht, die mindestens eine keramische Platte aufweist, dadurch gekennzeichnet, daß die Teile einen Querschnitt über 25 mm haben, und daß mindestens zwei keramische Platten nebeneinander angeordnet sind, zwischen denen ein Zwischenraum von ungefähr 10 mm gelassen ist, um die Zuführung des flüssigen Metalls zu ermöglichen.

10. Verbundverschleißteil, verwirklicht durch herkömmlichen Guß oder Schleuderguß, gemäß irgendeinem der vorhergehenden Ansprüche, das aus einer metallischen Grundmasse besteht, die eine verschleißfeste, keramische Platte aufweist, dadurch gekennzeichnet, daß die keramische Platte eine Bienenwabenstruktur hat, deren verschiedene Zellen eine polygonale oder kreisförmige Form innerhalb der keramischen Phase haben.

11. Verbundverschleißteil gemäß Anspruch 10, dadurch gekennzeichnet, daß die Dicke der Wände der verschiedenen Zellen, aus denen die keramische Phase besteht, von 5 bis 25 mm variiert.

## Claims

1. Composite wear component produced by classical or centrifugal casting using sand moulds and consisting of a metal matrix whose working face or faces include inserts which have a very high wear resistance, characterized in that the components have a section larger than 25mm and in that the inserts consist of a ceramic pad, this ceramic pad consisting of a homogeneous solid solution of 20 to 80 % of Al₂O₃ and 80 to 20 % of ZrO₂, the percentages being expressed by weights of the constituents, and the pad then being impregnated with a liquid metal during the casting.

2. Composite wear component according to Claim 1, characterized in that the ceramic material includes from 55 to 60 % by weight of Al₂O₃ and from 38 to 42 % by weight of ZrO₂.

3. Composite wear component according to Claim 1, characterized in that the ceramic material includes from 70 to 77 % by weight of Al₂O₃ and from 23 to 27 % by weight of ZrO₂.

4. Composite wear component according to any one of the preceding claims, characterized in that the content of ceramic materials in the insert is between 35 and 80 % by weight, preferably between 40 and 60 % and advantageously of the order of 50 %.

5. Composite wear component according to any one of the preceding claims, characterized in that the inserts consist of an aggregate of composite ceramic grains which have a particle size within the range F6 to F22 according to the FEPA standard.

6. Composite wear component according to any one of the preceding claims, characterized in that the ceramic grains are manufactured by electrofusion, by sintering, by flame spraying or any other process.

7. Composite wear component according to any one of the preceding claims, characterized in that the ceramic grains are joined integrally with the aid of an inorganic or organic liquid adhesive with a view to the production of the ceramic pad.

8. Composite wear component according to Claim 7, characterized in that the pad does not contain more than 4 % of adhesive.

9. Composite wear component produced by casting using sand moulds and composed of a metal matrix including at least one ceramic pad, characterized in that the components have a section larger than 25mm and in that at least two ceramic pads are placed side by side, leaving a gap of the order of 10 mm in order to permit the arrival of the liquid metal.

10. Composite wear component produced by classical or centrifugal casting according to any of the preceeding claims and made up of a metal matrix including a wear-resistant ceramic pad, characterized in that the ceramic pad is in the form of a honeycomb structure in which the various cells are of polygonal or circular shape within the ceramic phase.

11. Composite wear component according to Claim 10, characterized in that the thickness of the walls of the various cells constituting the ceramic phase varies from 5 to 25 mm.
